# EUROPÄISCHE PATENTSCHRIFT

(11) **EP 0 851 992 B1**
(45) Veröffentlichungstag und Bekanntmachung des Hinweises auf die Patenterteilung: **01.09.1999**
(21) Anmeldenummer: 96929124.4
(22) Anmeldetag: 16.09.1996
(51) Int. Cl.: F24D 11/00, F28D 20/00

(54) **HEIZKÖRPER UND HEIZANLAGE**
HEATER AND HEATING INSTALLATION
RADIATEUR ET INSTALLATION DE CHAUFFAGE

(30) Priorität: 18.09.1995 AT 154095; 02.10.1995 AT 162095
(43) Veröffentlichungstag der Anmeldung: 08.07.1998
(73) Patentinhaber: Werner, Franz, Stefan, 1090 Wien (AT); Lackner, Franz, 8970 Schladming (AT)
(72) Erfinder: Werner, Franz, Stefan, 1090 Wien (AT); Lackner, Franz, 8970 Schladming (AT)
(74) Vertreter: Häupl, Armin, Dipl.-Ing.
(86) Internationale Anmeldenummer: AT9600161
(87) Internationale Veröffentlichungsnummer: WO9711314

(56) Entgegenhaltungen:
- EP-A- 0 059 976
- DE-U- 9 401 979
- NL-A- 8 201 323

## Beschreibung

Die Erfindung betrifft einen Heizkörper mit einer Kammer zur Durchströmung mit Wärmeträgermedium, die Anschlüsse an einen Heizmediumkreislauf aufweist, wobei vorzugsweise die Kammer zumindest teilweise an einem festen Wärmespeicherkern anliegt. Weiters betrifft die Erfindung eine Heizanlage mit einem erfindungsgemäßen Heizkörper unter Anwendung von Sonnenenergie.

Heizkörper dieser und ähnlicher Bauart werden beispielsweise in Warmwasserzentralheizungen eingesetzt, deren Heizquelle Gasthermen, Ölfeuerungen, Feststoffverbrennungsöfen, aber auch Sonnenkollektoren sind.

Aus der DE-U-9401979 ist ein Heizkörper bekannt, der einen festen Wärmespeicherkern aufweist, durch den sich mäanderförmig ein Heizrohrregister erstreckt, durch das Warmwasser als Wärmeträgermedium fließt. Der Wärmespeicherkern ist mit hohlen Luftdurchführungsrohren durchsetzt, die sich vertikal durch den Heizkörper erstrecken und oben und unten offen sind, wobei sie an ihrer oberen Öffnung mit Schiebern verschlossen werden können. Diese Luftdurchführungsrohre werden vom Heizrohrregister durchsetzt und dienen dazu, daß Umgebungsluft von unten nach oben durch den Heizkörper strömen kann und somit Wärmekonvektion erzeugt wird.

Andere Heizkörper nach dem Stand der Technik bestehen allgemein aus einem Mantel aus Blech mit möglichst großer Außenfläche, durch dessen Innenraum das durch die Heizquelle erwärmte Wärmeträgermedium durchströmt, dabei seine Wärme an den Heizkörpermantel abgibt und abgekühlt zur Heizquelle zurückgeführt wird. Der Nachteil dieses beschriebenen Heizkörpers besteht darin, daß der Heizkörpermantel nur geringe Wärmespeicherkapazität aufweist. Der Zufluß von Wärmeträgermedium zum Heizkörper erfolgt im allgemeinen thermostatgesteuert intermittierend, sodaß der Heizkörper ständig einem beträchtlichen Erwärmungs- und Abkühlungszyklus unterliegt.

Es wäre wünschenswert, obigen Nachteil der Heizkörper nach dem Stand der Technik ausschalten zu können, indem eine gleichmäßigere Wärmeabgabe des Heizkörpers bei geringerer Schwankung der Heizkörpertemperatur erreicht wird, sodaß insbesondere bei Verwendung von Sonnenkollektoren als Heizquelle, aber auch bei den anderen genannten Energiequellen als Wärmeerzeuger keine ungewollten Wärmeschwankungen in der Raumbeheizung mehr auftreten.

Die vorliegende Erfindung bietet eine Lösung für das geschilderte Problem durch Bereitstellen eines Heizkörpers, der dadurch gekennzeichnet ist, daß er weiters einen mit Wärmespeicherfluid befüllbaren Behälter aus wärmeleitendem Material aufweist, durch den sich die Kammer zumindest teilweise erstreckt, wobei die Kammer und der Behälter miteinander in thermisch leitender Beziehung ohne Fluidkommunikation stehen.

Dieser erfindungsgemäße Heizkörper weist somit in seinem Inneren eine große Wärmespeichermasse auf, die durch das Wärmeträgermedium im Heizkreislauf erhitzt wird und dann allmählich ihre gespeicherte Wärme an die Umgebung abgibt. Die Temperatur der Wärmespeichermasse im Heizkörperinneren kann von Hand oder mittels Thermostat geregelt werden, ebenso wie - aber unabhängig von ersterer - die Wärmeabgabe des Heizkörpers.

Je nachdem, ob eine raschere Wärmeübertragung auf die Wärmespeichermasse erwünscht ist oder eine langsame Dauerentnahme erfolgen soll, wird im ersten Fall zweckmäßig Wasser oder eine organische Wärmespeicherflüssigkeit als Wärmespeichermasse verwendet werden, im zweiten Fall jedoch Schamott, Marmor oder dergleichen als Wärmespeicherkern der Vorzug gegeben werden, der insbesondere bei längerer Zeit nicht bewohnten Wohneinheiten wie Zweitwohnsitzen in Verbindung mit Sonnenkollektoren zur Verhinderung von Frostschäden vorteilhaft ist.

Natürlich können der Behälter für Wärmespeicherfluid und der feste Wärmespeicherkern auch in Kombination verwendet werden, wobei bei Lieferung und Montage des Heizkörpers der Behälter für Wärmespeicherfluid leer ist und erst nach erfolgter Montage gefüllt wird. Vorzugsweise weist der Behälter für Wärmespeicherfluid weitere verschließbare Öffnungen zum Entlüften und Entleeren auf.

Der erfindungsgemäße Heizkörper eignet sich zum Einbau in alle bekannten Warmwasserzentralheizungen sowie zum Einsatz in Sonnenkollektorheizungen mit Umwälzpumpen.

Die Kammer zur Durchströmung mit Wärmeträgermedium kann gemäß einer Ausführungsform der Erfindung als Kupferstreifenwärmetauscher ausgebildet sein, der den Behälter für Wärmespeichermedium und bzw. oder den Wärmespeicherkern durchsetzt, wodurch eine sehr gute Wärmeübertragung auf das Wärmespeicherfluid und bzw. oder den Wärmespeicherkern gewährleistet ist.

Zur besseren Wärmeabstrahlung des Heizkörpers an die Umgebung ist dieser bevorzugt mit durch Rippen vergrößerten Oberflächenplatten aus gut wärmeleitendem Material versehen.

Es erweist sich als günstig, wenn eine Wand des Behälters für Wärmespeicherfluid zumindest einen Teil eines Luftströmungskanals im Heizkörper definiert. Dadurch gibt das Wärmespeicherfluid seine Wärme allmählich an die im Luftströmungskanal strömende Luft ab und erwärmt so den umgebenden Raum durch Konvektion.

Zur Steuerung der Geschwindigkeit der Wärmeabgabe an die Luft im Strömungskanal und damit zur Steuerung der Abkühlgeschwindigkeit des Wärmespeichermediums kann erfindungsgemäß vorgesehen sein, daß der Querschnitt des Luftströmungskanals durch zumindest eine manuell betätigbare oder temperaturabhängig steuerbare Drosselklappe veränderbar ist.

Die erwärmte Luft im Strömungskanal soll ihre Wärme als Konvektionswärme an den umgebenden Raum abgeben. Eine Erwärmung der Wand des Strömungskanals und insbesondere eine Wärmeabstrahlung durch die erwärmte Strömungskanalwand nach außen kann unerwünscht sein, wenn der Heizkörper nahe einer Hausaußenwand angeordnet ist. In diesern Fall ist es zweckmäßig, wenn der Luftströmungskanal an seiner der Heizkörperaußenseite zugewandten Fläche mit einer Wärmeisolierschicht versehen ist.

Als Wärmespeicherfluid kann erfindungsgemäß Wasser oder eine organische Wärmespeicherflüssigkeit (Wärmespeicheröl) eingesetzt werden, als fester Wärmespeicherkern kommt Schamott, Marmor oder dergleichen in Frage.

In einer Fortbildung der Erfindung ist vorgesehen, daß das Volumen des Behälters für Wärmespeicherfluid jenes der Kammer zur Durchströmung mit Wärmeträgermedium beträchtlich, insbesondere um mindestens das Dreifache, übersteigt.

Die Erfindung betrifft auch eine Heizanlage, umfassend einen oder mehrere erfindungsgemäße Heizkörper, der bzw. die über einen Zu- und Rücklauf einerseits mit einer Heizquelle, die mit fossilen Brennstoffen oder elektrischem Strom betrieben wird, und andererseits mit mindestens einem Sonnenkollektor verbunden ist bzw. sind, wobei Heizquelle und Sonnenkollektor(en) getrennt oder in Kombination betreibbar sind.

Vorteilhaft ist in dieser Heizanlage weiters ein Pufferspeicher zur Zwischenspeicherung überschüssigen erwärmten Wärmeträgermediums in den Heizkreislauf zwischengeschaltet.

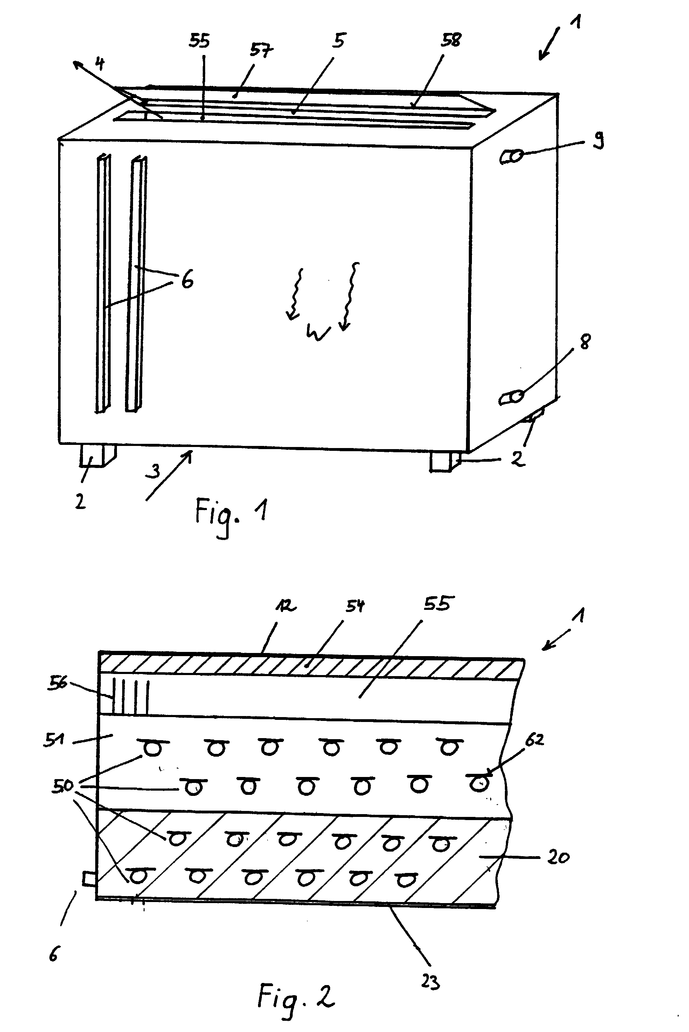

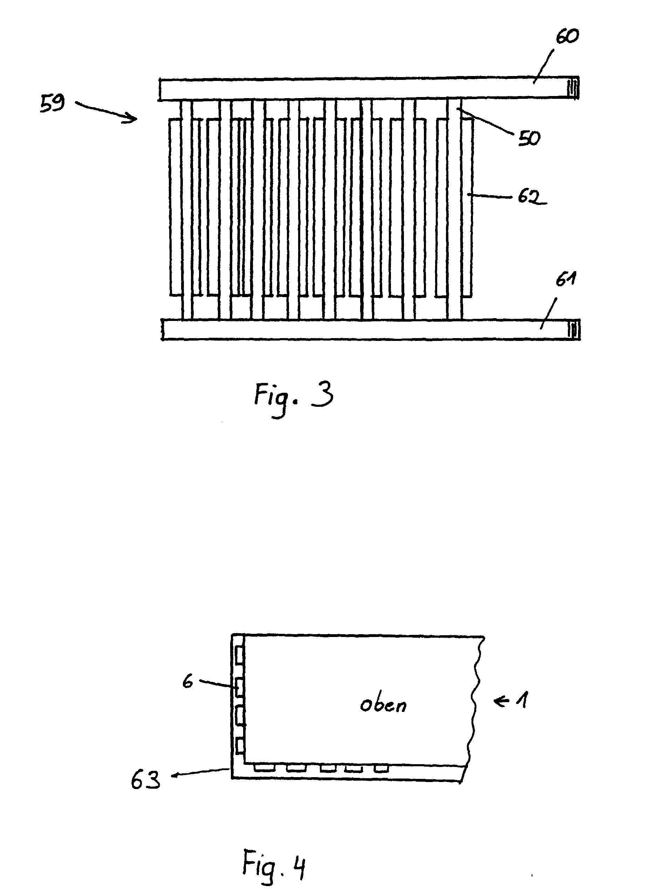

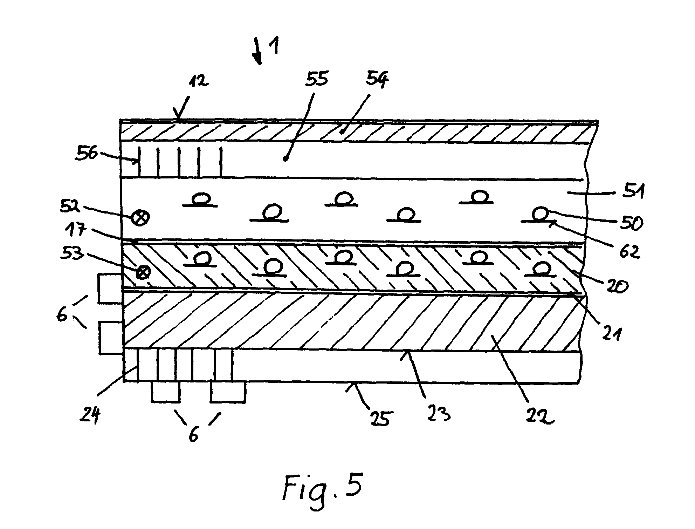

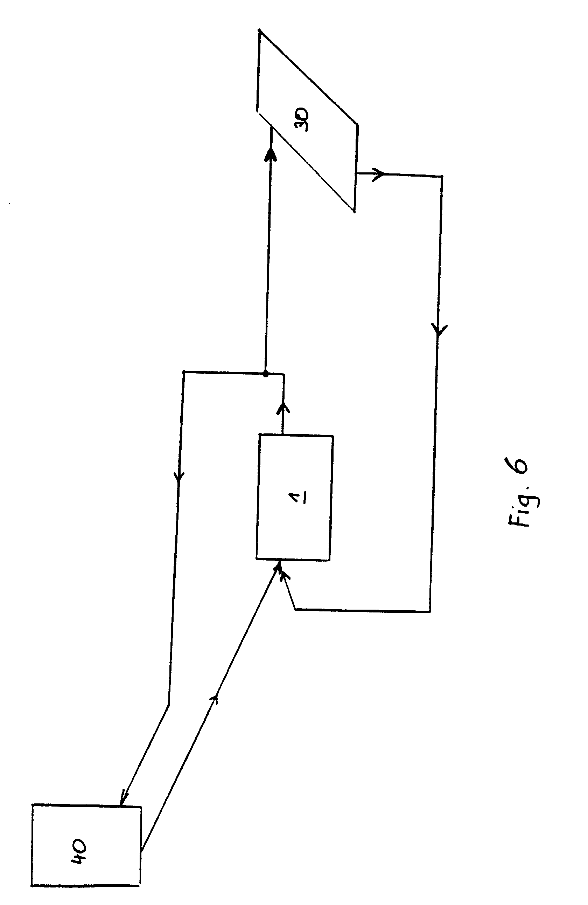

Die Erfindung wird nun anhand von Ausführungsbeispielen und unter Bezugnahme auf die beiliegenden Zeichnungen näher beschrieben. In den Zeichnungen zeigt Fig.1 einen erfindungsgemäßen Heizkörper in der Perspektive, Fig.2 denselben erfindungsgemäßen Heizkörper im Querschnitt, Fig.3 einen verwendeten Kupferstreifenwärmetauscher in Seitenansicht, Fig.4 ein Detail des Heizkörpers von Fig.1 und 2 in Draufsicht, Fig.5 eine weitere Ausführungsform des erfindungsgemäßen Heizkörpers und Fig.6 eine Funktionsschaltung einer Heizungsanlage mit einem erfindungsgemäßen Heizkörper.

Der erfindungsgemäße Heizkörper 1 in Fig.1 weist allgemein etwa Quaderform auf und ruht auf Beinen 2, die die Zuluftzufuhr (wie mit Pfeil 3 angedeutet) zur Heizkörperunterseite ermöglichen. Die Zuluft streicht im Heizkörperinneren durch Kanäle nach oben, wobei sie erwärmt wird und schließlich an der Heizkörperoberseite als erwärmte Abluft (Pfeil 4) durch Schlitze 5 den Heizkörper 1 verläßt. An der Außenseite des Heizkörpers sind Metalleisten 6 zur Erhöhung der Abstrahlfläche vorgesehen. Die Anzahl und Größe dieser Metalleisten kann nach Maßgabe variieren. Die von den Außenflächen des Heizkörpers abgestrahlte Wärme ist durch Pfeile W symbolisiert. Ein Warmwasserzuleitungsanschluß 8 und eine Wasserableitung 9 vervollständigen den Heizkörper. Ein an der Oberseite des Heizkörpers mündender Luftströmungskanal 55 kann durch eine Klappe 57 verschlossen werden, die mit einem Scharnier 58 am Heizkörper befestigt und daher schwenkbar ist. Die Stellung der Klappe 57 kann entweder von Hand eingestellt werden oder aber auch temperaturabhängig automatisch geregelt werden.

Als nächstes auf Fig.2 Bezug nehmend ist darin der erfindungsgemäße Heizkörper 1 im Querschnitt dargestellt. Er besteht aus einer Metallplatte 23, die eine Außenfläche des Heizkörpers darstellt und an deren Außenseite Metalleisten 6 zur Erhöhung der Abstrahlfläche angeordnet sind. Die Metallplatte 23 liegt wärmeleitend an einer Wärmespeicherschicht 20 an.

Die Wärmespeicherschicht 20 besteht aus ausgehärtetem Flüssigschamott. In ihr sind eine Vielzahl an senkrecht stehenden Wärmetauscherrohren 50 eines Kupferstreifenwärmetauschers eingegossen. Diese Wärmetauscherrohre 50 durchsetzen auch einen Behälter 51 für Wärmespeicherfluid, der an die feste Wärmespeicherschicht 20 angrenzt.

Der Behälter 51 für Wärmespeicherfluid ist an seiner vom Schamottkern abliegenden Wand, die einen Teil eines Luftströmungskanals 55 definiert, mit Lamellen 56 versehen, die zur besseren Wärmeabgabe in den Luftströmungskanal 55 ragen. Die Wand des Behälters 51 und deren Lamellen 56 bestehen aus gut wärmeleitendem Material. Der Luftströmungskanal wird an der dem Behälter 51 gegenüberliegenden Seite von einer Schicht 54 aus wärmeisolierendem Material begrenzt, an deren Außenseite eine Metallplatte 12 angeordnet ist. Weiters können im Behälter 51 für Wärmespeicherfluid und in der Wärmespeicherschicht 20 Thermostaten vorgesehen sein.

Der Behälter 51 ist über eine nicht dargestellte verschließbare Öffnung mit Wärmespeicherfluid befüllbar, wobei die Befüllung zweckmäßig erst nach dem Einbau des Heizkörpers erfolgt. Als Wärmespeicherfluid dient in den meisten Fällen Wasser, es kann aber auch ein organisches Wärmespeichermittel verwendet werden. Beispielsweise können Paraffine, Alkylbenzole, Phenylverbindungen, hochsiedende Ester und Siliconöle eingesetzt werden.

In Fig.3 ist ein im erfindungsgemäßen Heizkörper vorteilhaft zu verwendender Kupferstreifenwärmetauscher 59 dargestellt. Dieser besteht aus einem Zuleitungsrohr 61, einem Ableitungsrohr 60 und einer Vielzahl paralleler, räumlich voneinander beabstandeter Wärmetauscherrohre 50, die das Zuleitungsrohr 61 und das Ableitungsrohr 60 kommunizierend verbinden, so daß ein Heizmedium durch das Zuleitungsrohr, die Wärmetauscherrohre und das Ableitungsrohr fließen kann. Die Wände des Wärmetauschers bestehen aus Kupfer, die einzelnen Rohre sind ultraschallverschweißt. An die Wärmetauscherrohre 50 sind in Längsrichtung längliche Kupferstreifen 62 angeschweißt, die die Effektivität der Wärmeabgabe an die Umgebung erhöhen.

Es folgt ein Dimensionierungsbeispiel für einen erfindungsgemäßen Heizkörper mit den Außenmaßen von 100 x 75 x 23 cm, Lamellenbreiten von 3 bzw. 2 cm, und Oberflächen der Leisten 6 von 600 cm² pro Leiste. Damit ergibt sich eine Gesamtfläche aller wärmeabstrahlenden Oberflächen von 9,6 m², die mit der Abstrahlfläche einer Niedertemperatur-Fußbodenheizung gleichzusetzen sind, so daß eine Oberflächentemperatur des Heizkörpers von 40°C zur Beheizung eines Wohnraums mit 10 m² Grundfläche ausreichend ist. Der Behälter für Wärmespeicherfluid ist mit 100 x 75 x 10 cm dimensioniert, wodurch sich eine Füllmenge von 75 1 errechnet, die Schamottschicht hat die Maße 100 x 75 x 6 cm. Da die Dichte von Schamott ca. 1,8 g / cm³ ist, hat die Schamottschicht somit eine Masse von 81 kg. Man erkennt daraus, daß der erfindungsgemäße Speicherheizkörper ein Transportgewicht von weniger als 100 kg aufweist und damit von zwei Monteuren transportiert und eingebaut werden kann. Nach der Befüllung mit Wärmespeicherfluid wird jedoch fast eine Verdopplung der wärmespeichernden Masse erreicht. Der vorteilhaft im Heizkörper verwendete Wärmetauscher weist 24 Wärmetauscherrohre mit einer Länge von 50 cm und einem Durchmesser von 12 mm auf, von denen jeweils zwölf im Behälter 51 und zwölf in der Schamottschicht angeordnet sind. Das Füllvolumen aller 24 Wärmetauscherrohre beträgt somit 1,36 1, mit den Zu- und Ableitungen ergibt sich für den Wärmetauscher ein Gesamtfüllvolumen von 1,5 1. Diese geringe Füllmenge ermöglicht eine drastische Reduzierung der Heizmediummenge im Heizkreislauf.

Fig.4 zeigt eine spezielle Ausgestaltung der Oberseite des Heizkörpers 1, bei der ein Deckel 63 die Deckfläche des Heizkörpers bildet, wobei der Deckel über die Metalleisten 6 hinausragt und eine Strahlungsfolie aufweist. Der Deckel ist von den Oberseiten des Schamottkerns und des Behälters für das flüssige Wärmespeichermedium beabstandet, sodaß ein Luftspalt dazwischen entsteht, der in Verbindung mit der nicht dargestellten, im Deckel angeordneten Klappe zur Steuerung des Konvektionsstroms für einen besseren Konvektionsstrom sorgt. Aus Gründen der Übersichtlichkeit ist der Deckel transparent gezeichnet, obwohl er in Wirklichkeit aus Metall besteht.

Der erfindungsgemäße Heizkörper wird durch das Wärmeträgermedium erwärmt, das seinerseits in einer Gastherme, Ölheizung etc. erhitzt wird, wobei nach Erreichen der gewünschten Kern- bzw. Mantelaußentemperatur des Heizkörpers thermostatgesteuert die Zufuhr des Wärmeträgermediums in die Cu-Wärmetauscher gedrosselt bzw. abgeschaltet wird, um nach Absinken der Temperatur unter einen vorgegebenen Wert wieder aufgenommen zu werden.

Nun auf die Fig.5 Bezug nehmend ist darin eine zweite Ausführungsform eines erfindungsgemäßen Heizkörpers 1 im Querschnitt dargestellt. Dieser besteht aus einer Metallplatte 25, die eine Außenfläche des Heizkörpers darstellt und an deren Außenseite Metalleisten 6 zur Erhöhung der Abstrahlfläche angeordnet sind. Die Metallplatte 25 befindet sich im Parallelabstand von einer weiteren Metallplatte 23, die wärmeleitend an einer Schamottschicht 22 anliegt. Der Zwischenraum zwischen den Metallplatten 23 und 25 wird durch Lamellen 24 überbrückt, die als Wärmebrücke wirkend sowohl mit der Platte 23 als auch der Platte 25 verbunden sind. Auch die Lamellen 24 dienen wiederum der Vergrößerung der Wärmeabstrahlfläche.

Angrenzend an die Metallplatte 23 befindet sich eine erste Schamottschicht 22 und daran angrenzend eine zweite Schamottschicht 20. Zwischen diesen beiden Schamottschichten ist eine elektrische Widerstandsheizmatte 21 angeordnet, die mit Gleichstrom aus Solarzellen betreibbar ist. Die Schamottschicht 20 besteht aus ausgehärtetem Flüssigschamott. In ihr sind eine Vielzahl an senkrecht stehenden Wärmetauscherrohren 50 eines Kupferstreifenwärmetauschers eingegossen. Diese Wärmetauscherrohre 50 durchsetzen auch einen Behälter 51 für Wärmeübertragungsfluid, der an die Schamottschicht 20 angrenzt, wobei zwischen Behälter 51 und Schamottschicht 20 eine zweite elektrische Widerstandsheizmatte 17 angeordnet ist, die mit Wechselstrom aus dem allgemeinen Stromnetz betreibbar ist. Der Behälter 51 für Wärmeübertragungsfluid ist an seiner der Heizmatte 17 gegenüberliegenden Wand, die einen Teil eines Luftströmungskanals 55 definiert, mit Lamellen 56 versehen, die zur besseren Wärmeabgabe in den Luftströmungskanal 55 ragen. Die Wand des Behälters 51 und deren Lamellen 56 bestehen aus gut wärmeleitendem Material. Der Luftströmungskanal wird an der dem Behälter 51 gegenüberliegenden Seite von einer Schicht 54 aus wärmeisolierendem Material begrenzt, an deren Außenseite eine Metallplatte 12 angeordnet ist. Weiters sind im Behälter 51 für Wärmeübertragungsfluid und in der Schamottschicht 20 Thermostaten 52 und 53 vorgesehen. Der Behälter 51 ist über eine nicht dargestellte verschließbare Öffnung mit Wärmeübertragungsfluid befüllbar.

Unter Bezugnahme auf Fig.6 wird nun ein Schaltschema einer Heizanlage mit einem erfindungsgemäßen Heizkörper 1 beschrieben. Der Zulauf dieses Heizkörpers steht mit einer herkömmlichen Heizquelle 40, die mit Gas, Öl etc. betrieben wird, in Verbindung und wird über diese Leitung mit Heißwasser versorgt, das nach Passieren des Heizkörpers wieder zur Heizquelle 40 zurückgeleitet wird. Gleichzeitig steht der Heizkörper 1 auch mit dem Heißwasservorlauf eines Sonnenkollektors 30 in Verbindung, wobei weiters ein Rücklauf vom Heizkörperabfluß zum Sonnenkollektorzufluß vorhanden ist. Der Heizkörper 1 ist somit an zwei verschiedene Heizkreisläufe angeschlossen, die in Kombination oder getrennt betrieben werden können. Überschüssiges Warmwasser aus dem Sonnenkollektor kann in Pufferspeicher oder einen Wärmetauscher zur Erzeugung von Brauchwasser geleitet werden. Bei Verwendung von Heizkörpern gemäß dem Ausführungsbeispiel von Fig.5 können weiters Solarzellen zur Erzeugung von Gleichstrom zum Betrieb der elektrischen Widerstandsheizelemente in den Heizkörpern vorgesehen sein.

## Patentansprüche

1. Heizkörper mit einer Kammer zur Durchströmung mit Wärmeträgermedium, die Anschlüsse an einen Heizmediumkreislauf aufweist, wobei vorzugsweise die Kammer zumindest teilweise an einem festen Wärmespeicherkern (20) anliegt, dadurch gekennzeichnet, daß der Heizkörper (1) weiters einen mit Wärmespeicherfluid befüllbaren Behälter (51) aus wärmeleitendem Material aufweist, durch den sich die Kammer (50,59) zumindest teilweise erstreckt, wobei die Kammer (50,59) und der Behälter (51) miteinander in thermisch leitender Beziehung ohne Fluidkommunikation stehen.

2. Heizkörper nach Anspruch 1, dadurch gekennzeichnet, daß die Kammer zur Durchströmung mit Wärmeträgermedium als Kupferstreifenwärmetauscher (59) ausgebildet ist, der den Behälter (51) für Wärmespeicherfluid und bzw. oder den Wärmespeicherkern (20) durchsetzt.

3. Heizkörper nach Anspruch 1 oder 2, dadurch gekennzeichnet, daß er an seiner Oberfläche mit, vorzugsweise durch Rippen (6) vergrößerten, Platten (25) aus gut wärmeleitendem Material versehen ist.

4. Heizkörper nach einem der Ansprüche 1 bis 3, dadurch gekennzeichnet, daß eine Wand des Behälters (51) für Wärmespeicherfluid zumindest einen Teil eines Luftströmungskanals (55) im Heizkörper (1) definiert.

5. Heizkörper nach Anspruch 4, dadurch gekennzeichnet, daß der Querschnitt des Luftströmungskanals (55) durch zumindest eine manuell betätigbare oder temperaturabhängig steuerbare Drosselklappe (57) veränderbar ist.

6. Heizkörper nach Anspruch 4 oder 5, dadurch gekennzeichnet, daß der Luftströmungskanal (55) an seiner der Heizkörperaußenseite zugewandten Fläche mit einer Wärmeisolierschicht (54) versehen ist.

7. Heizkörper nach einem der vorhergehenden Ansprüche, dadurch gekennzeichnet, daß der feste Wärmespeicherkern (20) aus Schamott oder Marmor besteht.

8. Heizkörper nach einem der vorhergehenden Ansprüche, dadurch gekennzeichnet, daß das Wärmespeicherfluid Wasser oder eine organische Wärmespeicherflüssigkeit ist.

9. Heizkörper nach einem der vorhergehenden Ansprüche, dadurch gekennzeichnet, daß der Behälter (51) für Wärmespeicherfluid mit zumindest einer verschließbaren Öffnung zum Befüllen, Entlüften oder Entleeren versehen ist.

10. Heizkörper nach einem der vorhergehenden Ansprüche, dadurch gekennzeichnet, daß das Volumen des Behälters (51) für Wärmespeicherfluid jenes der Kammer (50,59) zur Durchströmung mit Wärmeträgermedium beträchtlich, insbesondere um mindestens das Dreifache, übersteigt.

11. Heizkörper nach einem der vorhergehenden Ansprüche, dadurch gekennzeichnet, daß weiters zumindest ein am Behälter (51) für Wärmespeicherfluid und bzw. oder am bzw. im wärmespeichernden Kern (20) angeordnetes elektrisches Widerstandsheizelement (17,21) vorgesehen ist.

12. Heizkörper nach Anspruch 11, dadurch gekennzeichnet, daß das mindestens eine elektrische Widerstandsheizelement (17,21) umschaltbar mit, vorzugsweise aus Solarzellen gewonnenem, Gleichstrom oder mit Wechselstrom aus dem allgemeinen Stromnetz betreibbar ist.

13. Heizanlage, umfassend einen oder mehrere Heizkörper nach Anspruch 1 bis 12, der bzw. die über einen Zu- und Rücklauf einerseits mit einer Heizquelle (40), die mit fossilen Brennstoffen oder elektrischem Strom betrieben wird, und andererseits mit mindestens einem Sonnenkollektor (30) verbunden ist bzw. sind, wobei Heizquelle (40) und Sonnenkollektor(en) (30) getrennt oder in Kombination betreibbar sind.

14. Heizanlage nach Anspruch 13, dadurch gekennzeichnet, daß weiters ein Pufferspeicher zur Zwischenspeicherung überschüssigen erwärmten Wärmeträgermediums in den Heizkreislauf zwischengeschaltet ist.

## Claims

1. A heater having a chamber for the circulation of heat conveying medium, which chamber has connections to a heat conveying medium cycle, the chamber preferably at least partly contacting a solid heat storage core (20), characterized in that the heater (1) further has a container (51) made of heat conducting material to be filled with heat storage fluid, the chamber (50, 59) at least partly extending through the container, the chamber (50, 59) and the container (51) being in a thermally conducting relation without fluid communication.

2. The heater according to claim 1, characterized in that the chamber for the circulation of heat conveying medium takes the form of a copper strip heat exchanger (59) with which container (51) for heat storage fluid and/or heat storage core (20) is/are penetrated.

3. The heater according to claim 1 or claim 2, characterized in that it is provided with plates (25) of material with good heat-conduction, preferably enlarged by ribs (6), on its surface.

4. The heater according to any of claims 1 to 3, characterized in that one wall of the container (51) for heat storage fluid defines at least part of an air flow channel (55) in heater (1).

5. The heater according to claim 4, characterized in that the cross-section of air flow channel (55) is variable by at least one flap valve (57) which may either be adjusted manually or controlled automatically depending on temperature.

6. The heater according to claim 4 or claim 5, characterized in that the air flow channel (55) is provided with a heat insulating layer (54) on its surface facing the outer side of the heater.

7. The heater according to any of the preceeding claims, characterized in that the solid heat storage core (20) consists of chamotte or marble.

8. The heater according to any of the preceeding claims, characterized in that the heat storage fluid is water or an organic heat storage liquid.

9. The heater according to any of the preceeding claims, characterized in that the container (51) for heat storage fluid is provided with at least one sealable opening for filling, deaerating or emptying the container.

10. The heater according to any of the preceeding claims, characterized in that the volume of the container (51) for heat storage fluid is considerably, in particular at least three times, higher than that of the chamber (50,59) for the circulation of heat conveying medium.

11. The heater according to any of the preceeding claims, characterized in that furthermore provision is made for at least one electric resistance heating element (17,21), which is arranged on the container (51) for heat storage fluid and/or on and in the heat storing core (20), respectively.

12. The heater according to claim 11, characterized in that at least one electric resistance heating element (17,21) may be switched to be operable either by direct current, preferably generated by solar cells, or by alternating current from the mains supply.

13. A heating installation, comprising one or several heaters according to any of claims 1 to 12, which is/are connected, on the one hand, to a heat source (40) operated with fossile fuels or electric power via a supply and a return, and, on the other hand, to at least one solar collector (30), heat source (40) and solar collector(s) (30) being operable separately or in combination.

14. The heating installation according to claim 13, characterized in that furthermore a buffer storage is interposed in the heating circuit for intermediate storage of surplus heated heat conveying medium.

## Revendications

1. Radiateur ayant une chambre à être traversée par un cours d'agent caloporteur, pourvue de raccords à un cycle d'agent de chauffage, la chambre étant préférablement au moins partiellement contiguë à un coeur accumulateur de chaleur (20) solide, caractérisé en ce que le radiateur (1) comprend en outre un récipient (51) de matière conductrice de chaleur, qui peut être chargé de fluide accumulateur de chaleur et dans lequel la chambre (50, 59) s'étend au moins partiellement, la chambre (50, 59) et le récipient (51) ayant un rapport de conduction thermique sans communication de fluide.

2. Le radiateur selon la revendication 1, caractérisé en ce que la chambre à être traversée par un cours d'agent caloporteur est formée comme échangeur thermique à lame de cuivre (59), traversant le récipient (51) pour fluide accumulateur de chaleur et/ou le coeur accumulateur de chaleur (20).

3. Le radiateur selon l'une des revendications 1 et 2, caractérisé en ce que son surface est pourvu de plaques (25) d'une matière bonne conductrice de chaleur, qui sont de préférence agrandies par des ailettes (6).

4. Le radiateur selon l'une des revendications 1 à 3, caractérisé en ce qu'une paroi du récipient (51) pour fluide accumulateur de chaleur définit au moins une partie d'un passage de courant d'air (55) dans le radiateur (1).

5. Le radiateur selon la revendication 4, caractérisé en ce que la section transversale du passage de courant d'air (55) peut être changée par au moins un volet de réglage (57) qui peut être actionné manuellement ou commandé selon la température.

6. Le radiateur selon la revendication 4 ou 5, caractérisé en ce que le passage de courant d'air (55) est pourvu d'une couche d'isolation thermique (54) à sa surface dirigée vers l'extérieur du radiateur.

7. Le radiateur selon l'une des revendications précédantes, caractérisé en ce que le coeur accumulateur de chaleur (20) solide est composé de chamotte ou de marbre.

8. Le radiateur selon l'une des revendication précédantes, caractérisé en ce que le fluide accumulateur de chaleur est de l'eau ou un liquide organique accumulateur de chaleur.

9. Le radiateur selon l'une des revendications précédantes, caractérisé en ce que le récipient (51) pour fluide accumulateur de chaleur est pourvu d'au moins un orifice qui peut être fermé et sert pour le remplir, le ventiler ou l'évacuer.

10. Le radiateur selon l'une des revendications précédantes, caractérisé en ce que le volume du récipient (51) pour fluide accumulateur de chaleur est considérablement supérieur à celui de la chambre (50, 59) à être traversée par un cours d'agent caloporteur, en particulier au moins trois fois plus grand.

11. Le radiateur selon l'une des revendications précédantes, caractérisé en ce qu'au moins un élément de chauffage ohmique (17, 21) est en outre prévu, arrangé au récipient (51) pour fluide accumulateur de chaleur et/ou au coeur accumulateur de chaleur (20) ou bien là-dedans.

12. Le radiateur selon la revendication 11, caractérisé en ce que l'au moins un élément de chauffage ohmique (17, 21) peut être actionné alternativement par courant continu, préférablement obtenu par des cellules solaires, ou par courant alternatif venant du réseau général.

13. Installation de chauffage, comprenant un ou plusieurs radiateurs selon l'une des revendications 1 à 12, qui est/sont relié(s), par une conduite d'arrivée et un retour, d'une part à une source de chauffage (40) opérée avec des combustibles fossiles ou du courant, et d'autre part à au moins un collecteur solaire (30), la source de chauffage (40) et le(s) collecteur(s) solaire(s) (30) pouvant être opérés séparément ou en combinaison.

14. L'installation de chauffage selon la revendication 13, caractérisée en ce qu'additionellement un réservoir d'accumulation pour l'accumulation temporaire d'un excès d'agent caloporteur chauffé est intercalé dans le cycle de chauffage.
